# EUROPÄISCHE PATENTSCHRIFT

(11) **EP 2 366 073 B1**
(45) Veröffentlichungstag und Bekanntmachung des Hinweises auf die Patenterteilung: **11.04.2018**
(21) Anmeldenummer: 09771724.3
(22) Anmeldetag: 15.11.2009
(51) Int. Cl.: F16K 11/087, A23G 9/22

(54) **NAHRUNGSMITTELMISCHMASCHINE MIT EINER ROHRSCHLIESSVORRICHTUNG**
MACHINE FOR TREATING FOOD MIXTURES WITH A PIPE-CLOSING APPARATUS
MACHINE DE TRAITEMENT DE MÉLANGES ALIMENTAIRES AVEC UN DISPOSITIF DE FERMETURE DE TUBE

(30) Priorität: 17.11.2008 DE 102008057683
(43) Veröffentlichungstag der Anmeldung: 21.09.2011
(73) Patentinhaber: Heij, Marinus Cornelis Adrianus, 5095 AS Hooge Mierde (NL)
(72) Erfinder: Heij, Marinus Cornelis Adrianus, 5095 AS Hooge Mierde (NL)
(74) Vertreter: Heilein, Ernst - Peter
(86) Internationale Anmeldenummer: PCT/EP2009/065182
(87) Internationale Veröffentlichungsnummer: WO 2010/055150

(56) Entgegenhaltungen:
- EP-A1- 1 203 606
- EP-A1- 1 319 876
- WO-A1-03/046423
- JP-A- 59 164 466
- JP-U- 54 158 789
- US-A- 3 498 582
- US-A1- 2008 202 607

## Beschreibung

Die vorliegende Erfindung betrifft eine Nahrungsmittelmischmaschine mit einer Rohrschließvorrichtung, wobei die Nahrungsmittelmischmaschine zur Bearbeitung u.a. von Nahrungsmittelmischungen geeignet ist, insbesondere eine Maschine zur Herstellung einer auf Milch basierenden Eiscreme, wobei als Ausgangsprodukt ganz oder teilweise Rohmilch und/oder andere unpasteurisierte Produkte Verwendung finden können, die Rohrschließvorrichtung umfassend ein in einer Rohrleitung angeordnetes Drosselventil mit einem Schließelement, welches gegenüber der Rohrleitung mit zwei Dichtabschnitten ausgestaltet ist, und einer Aktivierungsvorrichtung für die Überführung des Schließelements in eine Offen- bzw. Schließstellung sowie umgekehrt.

Maschinen zur Bearbeitung von Nahrungsmittelmischungen, welche zum Beispiel auch Pasteurisatoren und Homogenisatoren umfassen, können mit einer Reihe von Rohrleitungen und/oder Tanks ausgestattet sein, in welchen verschiedene Bearbeitungsphasen ausgeführt werden. Die Tanks sind miteinander mittels Rohren verbunden, welche mit Schließvorrichtungen ausgestaltet sind, welche zum Beispiel aus einem Drosselventil bestehen, welches den zeitweiligen Strom der Nahrungsmittelmischung reguliert.

Die Dokumente FR 2 341 083, GB 435 059 und FR 726 548 offenbaren beispielhaft Rohrschließvorrichtungen, welche ein Drosselventil umfassen, welches über dem Umfang mit einem entfernbaren aufblasbaren Dichtring ausgestaltet ist.

Die bekannten Drosselventile können jedoch aufgrund von Bearbeitungstoleranzen oder als Ergebnis eines Verschleißes über eine Zeitspanne ein leichtes Ansaugen oder vergleichbare Undichtigkeiten aufweisen.

Aus der JP 54-158789 U ist ein Hochdruck-Absperrventil bekannt, welches im Fall, dass der hochdruckseitige Ventilsitz oder der Kugelventilkörper beschädigt sind, die Freilassung von Gas über ein Auslassrohr eines Auslasses in die Atmosphäre gestattet.

Aus der JP 59-164466 A ist eine Rohrschließvorrichtung für Nassschwämme wie Gülle ("slurry") bekannt, bei welcher der Durchgang eines Kugelventils zum Entleeren von im Durchgang gefangener Fluidreste einem Druck aussetzbar ist.

Im Übrigen sei ergänzend auf die aus der US 2008/0202607 A1, der EP 1 203 606 A1, der WO 2003/046423 A1 oder der US 3,498,582 A bekannten Rohrschließvorrichtungen hingewiesen.

Bei einem bestimmten Fall einer Maschine zur Herstellung von selbst gemachter Eiscreme, um ein verdeutlichendes aber nicht einschränkendes Beispiel zu geben, basiert die bearbeitete Nahrungsmittelmischung im Allgemeinen auf Rohmilch und/oder anderen unpasteurisierten Produkten. Maschinen des bekannten Typs umfassen den Einsatz von aufgeheizten Pasteurisierern, optional mit alternden Rohrleitungen, und gekühlten Eindickern, insb. sog. Gefrierzylinder, welche mit Mischern ausgestaltet sind. Die Eiscreme (als Endprodukt) wird dann durch eine auf dem vordersten Teil des Eindickers bzw. Gefrierzylinders vorhandenen Öffnung bereitgestellt.

Die Verbindung eines oberen Pasteurisiertanks von nicht pasteurisierter Rohmilch und/oder von Nahrungsmittelmischungen, welche möglicherweise auf anderen unpasteurisierten Nahrungsmittel-Produkten basieren, mit einem unteren Eindickungstank bzw. Gefrierzylinder mittels eines durch ein Drosselventil verschlossenes Rohres ist bereits bekannt. Am Ende der Pasteurisierphase der Nahrungsmittelmischung aktiviert beispielsweise eine Bedienperson manuell das Drosselventil, um die pasteurisierte Mischung von dem oberen Tank in den unteren Tank zu entladen.

Die Pasteurisierbehandlung einer ersten Nahrungsmittelmischung kann gleichzeitig mit der Eindickungsbehandlung einer vorher pasteurisierten Verbindung erfolgen, wodurch der kontinuierliche Betrieb der Maschine ermöglicht wird. Darüber hinaus ermöglicht die gleichzeitige Bearbeitung, wenn die für das Pasteurisier- und Eindickungsverfahren benötigten Zeiten praktisch identisch sind, die Optimierung des Herstellungsprozesses.

Ein mögliches Ansaugen des Drosselventils, auch wenn es minimal ist, kann nicht toleriert werden, wenn das Produkt, welches pasteurisiert werden soll, nicht pasteurisierte Milch oder eine Nahrungsmittelmischung ist, welche Rohmilch enthält. In einigen europäischen Staaten gibt es über allgemeine Regeln zum Verbraucherschutz hinaus tatsächlich bereits bestimmte Bestimmungen, welche die Behandlung von Milch und/oder von auf Milch basierenden Nahrungsmittelmischungen betreffen. Das Mischen von nicht pasteurisierter Milch mit Nahrungsmittelmischungen, welche keiner nachfolgenden Pasteurisierbehandlung unterzogen werden müssen, ist demnach völlig verboten.

Bei diesen Maschinen existiert daher das Problem, dass sie eine Schließvorrichtung für das Produkt in der Pasteurisierungsphase mit einer perfekten Abdichtung auch über eine Zeitspanne hinweg aufweisen müssen. Dasselbe Problem kann jedoch auch im Allgemeinen für Maschinen existieren, welche zur Bearbeitung bzw. Bereitung von Nahrungsmittelmischungen wie z.B. Karamelle, Konfitüre, Zuckerplätzchen, Bayerische Creme, Milchcreme oder sog. Konditorcremes etc. geeignet sind. Darüber hinaus muss diese Vorrichtung aus einem Material hergestellt sein, welches für den Einsatz für Nahrungsmittel geeignet ist, und sie muss geeignet ausgeformt sein, um Reinigungsvorgänge zu ermöglichen.

Aus der EP 0 350 017 A1 ist insbesondere für Einsatzfälle, in denen eine Trennung von Produktflüssigkeit und Reinigungsflüssigkeit vorgesehen werden muss, ein zwischen zwei Leitungen einfügbares Absperrorgan mit Leckageanzeige bekannt, welches ein Kugelhahn mit einem in Fließrichtung eines Mediums beidseitig durch in den Anschlussstutzen des Hahngehäuses lagefixiert eingefügte, von an das Gehäuse ansetzbaren Anschlussflanschen hinterfangenen Ringdichtungen abgedichteten kugelförmigen Schließkörper ist, von dessen zwischen dem Gehäuse, den Dichtungen und dem Schließkörper ausgebildeten Totraum eine ins Freie führende Leckageleitung ausgeht.

Aus der EP 1 319 876 B1 ist eine Rohrschließvorrichtung einer Maschine bekannt, welche zur Bearbeitung von Nahrungsmittelmischungen geeignet ist, umfassend ein Drosselventil, welches mit einem Umfangsdichtabschnitt auf einem Rohr ausgestaltet ist, und Aktivierungsvorrichtungen für die Überführung des Ventils in eine Offen- bzw. Schließstellung sowie umgekehrt, wobei der Umfangsdichtabschnitt durch eine pneumatische Schaltung für den Einlass von komprimierter Luft unter Druck gesetzt ist; wobei das Ventil außen mit einer Umfangshohlkehle zwischen zwei Dichtungslippen ausgestaltet ist, und wobei das Ventil aus einem aus einem elastischen nachgiebigen thermoplastischen Material hergestellten Scheibenkörper und mindestens einem Verstärkungskern mit einer Platte aufgebaut ist.

Ein insbesondere gummihaltiges und/oder aus einem elastisch nachgiebigen thermoplastischen Material hergestelltes Ventil weist jedoch den Nachteil auf, dass schon aufgrund des steten Wechsels von zumindest oberseitiger Erhitzung und anschließendem Kontakt mit der neu zu pasteurisierenden Kaltmischung es zu einer verhältnismäßig schnellen Abnutzung bzw. Versprödung des Ventils und in Folge dessen zur Undichtigkeit insb. der Umfangsdichtabschnitte kommen kann. Die Gefahr von Undichtigkeiten wird auch dadurch begünstigt, dass ein als Scheibenkörper ausgebildetes Ventil stets im Strömungskanal verbleibt und mit mindestens 72° bis 85° heißem pasteurisierten Medium umspült wird, weshalb das Ventil regelmäßiger Reinigung und Desinfektion mit bis zu 95° heißen Reinigungsmitteln bedarf. Das aufgrund derartiger Thermiken bestehende Risiko zur Undichtigkeit versucht man durch verhältnismäßig häufigen Komplett-Austausch des Ventils zu begegnen, was schon deshalb, aber auch aufgrund damit verbundener Maschinenstandszeiten, zu erhöhten Wartungskosten führt. Andernfalls jedoch wäre bereits bei Leckagen von 1 bis 3 sec. Dauer von der Kontaminierung des/der Lebensmittelprodukte auszugehen und ein Verkauf derselbigen gesetzlich verboten.

Dies sucht die vorliegende Erfindung zu vermeiden. Ihr liegt die Aufgabe zugrunde, eine gegenüber dem Stand der Technik verbesserte Nahrungsmittelmischmaschine mit einer Rohrschließvorrichtung, insbesondere eine Maschine zur Herstellung einer auf Milch basierenden Eiscreme, bereitzustellen.

Diese Aufgabe wird durch eine Nahrungsmittelmischmaschine mit einer Rohrschließvorrichtung gemäß den Merkmalen des unabhängigen Patentanspruchs 1 gelöst. Vorteilhafte Aus- und Weiterbildungen, welche einzeln oder in Kombination miteinander eingesetzt werden können, sind Gegenstand der abhängigen Ansprüche.

Die erfindungsgemäße Nahrungsmittelmischmaschine mit einer Rohrschließvorrichtung, insbesondere eine Eiscrememaschine oder andere Maschinen der eingangs genannten Art zur Bearbeitung von Nahrungsmittelmischungen, zeichnet sich durch ein Schließelement aus, dass durch einen dreidimensionalen rotationssymmetrischen Körper gebildet ist, welcher einen Durchgang aufweist, wobei in der Offenstellung des Schließelements zumindest die Ein- und Austrittsöffnung des Durchgangs mit der Rohrleitung fluchten und wobei in der Schließstellung des Schließelements der Durchgang durch eine pneumatische Schaltung für den Einlass von komprimierter Luft unter Druck setzbar bzw. einem Druck ausgesetzt ist.

Dabei weist die Verwendung eines Drosselventils mit einem dreidimensionalen rotationssymmetrischen Körper als Schließelement gegenüber den aus dem Stand der Technik bekannten Lippen eines Scheibenkörpers eine deutlich verbessert ausbildbare Dichtwirkung, nämlich einen nicht nur umfänglich sondern auch flächig wirkenden Dichtabschnitt, und in Folge dessen eine geringere Anfälligkeit für Undichtigkeiten insbesondere aufgrund von Temperaturwechsel als Vorteile auf.

Der das Schließelement bildende dreidimensionale rotationssymmetrische Körper kann als Hohlkörper ausgeführt sein, wobei vorteilhaft dessen Hohlraum zugleich den Durchgang bildet.

Alternativ hierzu kann der das Schließelement bildende dreidimensionale rotationssymmetrische Körper auch massiv ausgeführt sein, wobei bevorzugt eine Durchgangsbohrung den Durchgang bildet.

Erfindungsgemäß bevorzugt ist der Durchmesser zumindest der Ein- und Austrittsöffhung des Durchgangs im Wesentlichen gleich dem Innendurchmesser der Rohrleitung, wobei vorteilhaft keinerlei Körper und kaum Körperkonturen im Strömungskanal verbleiben, so dass auch dickere bzw. halbflüssige Nahrungsmittelmischungen wie insbesondere Konditorcremes oder vergleichbare Massen, welche gewöhnlich mit der Erhitzung (Pasteurisierung) bereits verdicken ebenso weitgehend ungehindert das Ventil durchfließen können wie etwaige Reinigungsmittel, was die Risiken für Abnutzung und Beschädigungen und damit für Undichtigkeiten des Ventils minimiert. Denn anderes als im Stand der Technik, wo das Schließelement des Drosselventils, ein im Strömungskanal verbleibender Scheibenkörper, nach jedem Nutzungsprozess vollständig entfernt und gereinigt werden muss, will man Auftrocknungen von Resten von Lebensmittelmischungen vermeiden, wird in Offenstellung des Durchgangs eines Schließelements, welches durch einen dreidimensionalen rotationssymmetrischen Körpers mit zur Rohrleitung korrespondierender Ein- und Austrittsöffnung gebildet ist, dieses vollständig durchströmt und bei Verwendung von Reinigungsmittel gereinigt bzw. desinfiziert, so dass auch bei neuer Inbetriebnahme der Maschine ein schlichter Vorreinigungsprozess gewöhnlich ausreicht und aufwendige Ausbauten vermieden sind.

Als Aktivierungseinrichtung kann bevorzugt eine entlang der Rotationsachse des Schließelements angreifender Drehachszapfen vorgesehen sein.

Die Aktivierung kann einfacher halber beispielsweise dergestalt ausgebildet sein, dass das dem Schließelement zugewandte Ende des Drehachszapfens in eine in dem rotationssymmetrischen Körper ausgebildete Aufnahme eingreift.

An dem entgegengesetzten, dem Schließelement abgewandten, Ende des Drehachszapfens kann wahlweise ein manuelles Bedienelement oder ein automatisierter Aktuator zur Überführung des rotationssymmetrischen Körpers in die Offen- bzw. Schließstellung sowie umgekehrt vorgesehen sein. Soweit ein automatisierter Aktuator Verwendung findet, kann dieser hydraulisch, pneumatisch und/oder elektrisch betreibbar ausgebildet sein.

Der das Schließelement bildende dreidimensionale rotationssymmetrische Körper weist bevorzugt die Form eines Kugelkörpers auf. Je nach Bauraum und/oder Verwendung können aber auch andere dreidimensionale rotationssymmetrische Objekte wie Doppelkegelkörper oder Ellipsoide Verwendung finden.

Erfindungsgemäß bevorzugt sind die beiden Dichtabschnitte des Schließelements durch Mantelflächen des kugel- oder rotationssymmetrischen Körpers gebildet, welche vorzugsweise an kugelschicht- bzw. rotationsschichtförmig ausgebildete Dichtkörper anliegen.

Dabei entspricht der kleine Durchmesser d2 des kugelschicht- bzw. rotationsschichtförmig an der Mantelfläche des kugel- oder rotationssymmetrischen Körpers anliegenden Dichtkörpers bevorzugt dem Durchmesser der Ein- bzw. Austrittsöffnung des im kugel- oder rotationssymmetrischen Körper ausgebildeten Durchgangs.

Der große Durchmesser d1 des kugelschicht- bzw. rotationsschichtförmig an der Mantelfläche des kugel- oder rotationssymmetrischen Körpers anliegenden Dichtkörpers kann je nach Bauraum und/oder Verwendung in einer ersten Ausgestaltung des schichtförmigen Dichtkörpers bereits wenige Millimeter x, beispielsweise zwischen 1,5 und 5, Millimeter vom kleinen Durchmesser d2 beabstandet angeordnet sein oder in einer zweiten Ausgestaltung des schichtförmigen Dichtkörpers im Wesentlichen mit dem maximalen Kugeldurchmesser bzw. dem maximalen Rotationskörperdurchmesser korrespondieren.

Insbesondere in der ersten Ausgestaltung eines Dichtkörpers hat sich bewährt, die komprimierte Luft durch eine im Ventilgehäuse ausgebildeten Öffnung in den Durchgang zuzuführen. Das grundsätzlich bestehende Risiko einer Keimpoolbildung ist hierbei vorteilhaft vermieden.

Soweit insbesondere die zweite Ausgestaltung eines Dichtkörpers Verwendung ist bevorzugt, dass die komprimierte Luft durch in dem Drehachszapfen und der Körperoberseite ausgebildete, vorzugsweise zueinander korrespondierende, Öffnungen in den Durchgang geführt wird. Aufgrund der Einbringung von komprimierter Luft durch den Drehachszapfen ist keinerlei Änderung oder in folge dessen gar Beschädigung der Dichtkörper gegeben, was die Gefahr potentieller Keimpools ebenfalls ausschließt.

Zweckmäßigerweise besteht schließlich insbesondere der das Schließelement bildende dreidimensionale rotationssymmetrische Körper des Ventils aus einem lebensmittelgeeignetem Material, insbesondere aus Metall wie Edelstahl oder Aluminium, aus Polyethylen (PE)-haltige Kunststoffe oder aus einer Keramik. Vorteilhafterweise sind auch die Dichtkörper zum Arbeitsdruck und zur Arbeitstemperatur der Maschine geeignet eingerichtet und vorzugsweise aus Polyethylen (PE)-haltige Kunststoffen oder aus einer Keramik gefertigt. Der jeweils damit einhergehende Verzicht auf ein insbesondere gummihaltiges und/oder elastisch nachgiebiges thermoplastisches Material enthaltendes Schließelement beseitigt vorteilhaft die damit verbundenen bekannten Nachteile.

Die erfindungsgemäße Nahrungsmittelmischmaschine mit einer Rohrschließvorrichtung, welche zur Bearbeitung von Nahrungsmittelmischungen geeignet ausgebildet ist, eignet sind gleichermaßen zur Verwendung in einer Maschine zur Herstellung einer Milch enthaltenden Eiscreme wie zur Bearbeitung bzw. Bereitung von z.B. Karamelle, Konfitüre, Zuckerplätzchen, Bayerische Creme, Milchcreme oder sog. Konditorcremes.

Zusätzliche Einzelheiten und weitere Vorteile der Erfindung werden nachfolgend beispielhaft an Hand einer Eismaschine, auf welches die vorliegende Erfindung jedoch nicht beschränkt ist, und in Verbindung mit der beigefügten Zeichnung beschrieben.

Darin zeigen schematisch:
- Fig. 1: in einer Seitenansicht eine Eiscremmaschine mit einer Rohrschließvorrichtung in einer Offenstellung;
- Fig. 2: die Eiscremmaschine aus Fig. 1 mit einer Rohrschließvorrichtung in einer Schließposition;
- Fig. 3: die Rohrschließvorrichtung aus Fig. 1 und 2 in Alleinstellung mit über den Drehachszapfen in den Durchgang zugeführter komprimierter Luft;
- Fig. 4: einen vergrößerten Ausschnitt des Schließelements der Rohrschließvorrichtung gemäß Fig. 3;
- Fig. 5: eine alternative Rohrschließvorrichtung in Alleinstellung einer zweiten Ausgestaltung mit über das Ventilgehäuse in den Durchgang zugeführter komprimierter Luft; und
- Fig. 6: einen vergrößerten Ausschnitt des Schließelements der Rohrschließvorrichtung gemäß Fig. 5.

Bei der nachfolgenden Beschreibung der bevorzugten Ausführungsformen der vorliegenden Erfindung bezeichnen gleiche Bezugszeichen gleiche oder vergleichbare Komponenten.

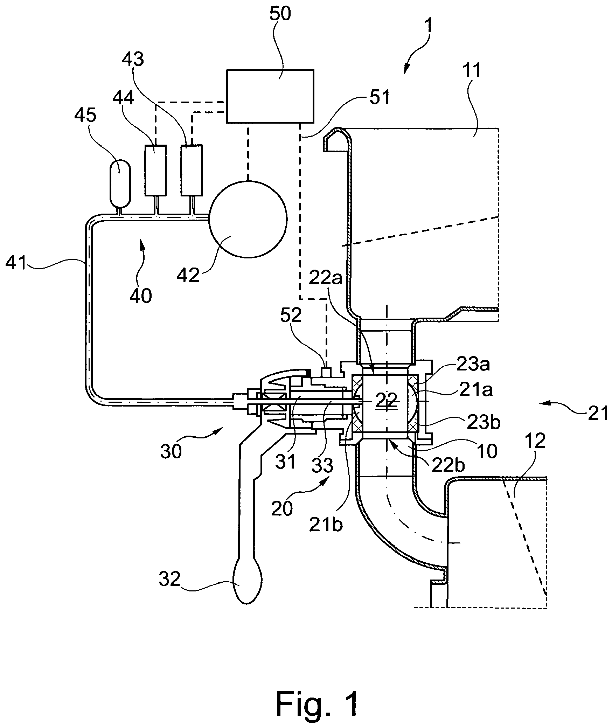

Fig. 1 zeigt in einer Seitenansicht eine Eiscremmaschine mit einer Rohrschließvorrichtung in einer Offenstellung, umfassend ein in einer Rohrleitung 10 angeordnetes Drosselventil 20 mit einem Schließelement 21, welches gegenüber der Rohrleitung 10 mit zwei Dichtabschnitten 21a und 21b ausgestaltet ist, und einer Aktivierungsvorrichtung 30 für die Überführung des Schließelements 21 in eine Offen- bzw. Schließstellung sowie umgekehrt.

Erkennbar wird das Schließelement 21 durch einen dreidimensionalen rotationssymmetrischen Körper gebildet. Wie dargestellt hat sich insbesondere eine durchbohrte Kugel als Schließelement 21 bewährt, wobei die Durchgangsbohrung den Durchgang 22 bildet. In der Offenstellung des Schließelements 21 fluchten die Eintrittsöffnung 22a wie auch die Austrittsöffnung 22b der Durchgangsbohrung 22 mit der Rohrleitung 10.

Die Rohrleitung 10 verbindet beispielweise einen oberen Tank 11 mit einem unteren Tank 12. Für den speziellen Fall einer Maschine zur Herstellung von Eiscreme wird die Pasteurisierung des auf Milch basierenden Anfangsgemischs in dem oberen Tank 11 ausgeführt, wohingegen das Eindicken in dem unteren Tank 12 ausgeführt werden kann.

Während mittels eines ersten Dichtabschnitts 21a bereits der Zulauf aus dem oberen Tank 11 verschließbar wäre, ermöglicht erst die Vorsehung eines zweiten Dichtabschnitts 21b eine Drucküberwachung. Zugleich verhindert der zweite Dichtabschnitt 21b vorteilhaft, dass aus dem zweiten Tank 12 nach oben geschlagene Flüssigkeiten potentielle Keimpools bilden.

Damit Nahrungsmittelmischungen wie Eiscreme, Karamelle, Konfitüre, Zuckerplätzchen, Bayerische Creme, Milchcreme, Konditorcremes oder andere Massen, welche bereits mit der Erhitzung (Pasteurisierung) verdicken, ungehindert vom oberen Tank 11 in den unteren Tank 12 strömen können ist der Durchmesser der Durchgangsbohrung 22 bevorzugt im Wesentlichen gleich dem Innendurchmesser der Rohrleitung 10 ausgebildet.

Die Überführung des Schließelements 21 von der Offenstellung in die Schließstellung erfolgt mittels einer Aktivierungseinrichtung 30, welche beispielsweise durch einen entlang der Rotationsachse R des Schließelements 21 angreifenden Drehachszapfen 31 gebildet ist. Das dem Schließelement 21 zugewandte Ende des Drehachszapfens 31 ist vorzugsweise dergestalt ausgebildet, dass es in eine im Schließelement 21 ausgebildete Aufnahme 24 eingreifen und ein Drehmoment auf den Schließkörper 21 übertragen kann.

An dem entgegen gesetzten, dem Schließelement 21 abgewandten, Ende des Drehachszapfens 31 kann wahlweise ein manuelles Bedienelement 32 oder ein automatisierter Aktuator zur Überführung des rotationssymmetrischen Körpers in die Offen- bzw. Schließstellung sowie umgekehrt vorgesehen sein. Soweit ein automatisierter Aktuator Verwendung findet (nicht dargestellt), kann dieser hydraulisch, pneumatisch und/oder elektro-mechanisch betreibbar ausgebildet sein.

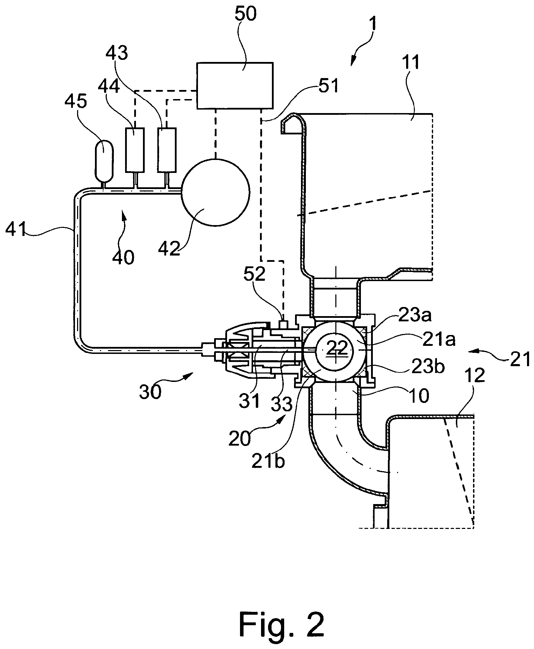

Fig. 2 zeigt die Eiscremmaschine aus Fig. 1 mit der Rohrschließvorrichtung in der Schließstellung des Schließelements 21.

Der Dichtsitz des Drosselventils 20, d.h. die beiden Dichtabschnitte 21a, 21b des Schließelements 21 werden durch Mantelflächen des kugel- oder rotationssymmetrischen Körpers gebildet, welche an kugelschichtförmig - oder soweit andere rotationssymmetrische Körper als Schließelement 21 Verwendung finden an rotationsschichtförmig - ausgebildete Dichtkörper 23a, 23b anliegen.

Erst der aus einem ersten 21a und zweiten 21b Dichtabschnitt gebildete Dichtsitz des Drosselventils 20 gestattet in der Schließposition die Durchgangsbohrung 22 des Schließelements 21 durch eine pneumatische Schaltung 40 für den Einlass von komprimierter Luft unter Druck zu setzen.

Dazu wird der pneumatischen Schaltung 40 trockene Luft eines Kompressors 42 zugeführt. Druckmessvorrichtungen sind hintereinander an dem Zufuhrrohr 41 angebracht, um den Systemdruck konstant zu halten und um in dem Fall von Druckabfällen einzugreifen. Ein Hochdruckwächter 43 und ein Niederdruckwächter 44 halten den Druck in einem vorbestimmten Wertebereich, zum Beispiel zwischen einem relativ zum Atmosphärendruck bzw. Luftdruck gemessenen Überdruck von 0,1 bar und einem Überdruck von 0,05 bar. Bei einer nicht dargestellten anderen Ausführungsform kann nur ein elektronischer Wächter vorgesehen sein, welcher geeignet ist, um nach oben und nach unten gerichtete Druckänderungen zu erfassen, um zum Beispiel einen konstanten Überdruckwert von 0,02 bar aufrecht zu halten.

Ein im Zufuhrrohr 41 angebrachter Luftreservetank 45 fungiert als eine Art Lungenkammer, um Druckänderungen zwischen den Entlade- und Zufuhrphasen des Kompressors 42 auszugleichen.

Ein beispielsweise magnetischer Positionssensor 52, welcher mittels einer elektrischen Leitung 51 mit einer elektronischen Steuereinheit 50 verbunden ist, ist benachbart des Drehachszapfens 31 angebracht. So kann beispielsweise ein akustisches Signal eine Bedienperson warnen, wenn sich das Schließelement 21 des Drosselventils 20 in einer offenen Position befindet, wodurch das zufällige Füllen des oberen Tanks 11 zur Unzeit vermieden wird, wenn die Rohrleitung 10 nicht verschlossen ist.

Die elektronische Steuereinheit 50 verarbeitet die von den Wächtern 43 und 44 und von dem Positionssensor 52 kommenden Signale, wobei die Einheit 50 über elektrische Leitungen 51 den Betrieb des Kompressors 42 ebenso steuern kann wie ggf. anderen periphere Vorrichtungen, z.B. einen Drucker zum Aufzeichnen des Verfahrens oder den Summer einer Alarmanlage.

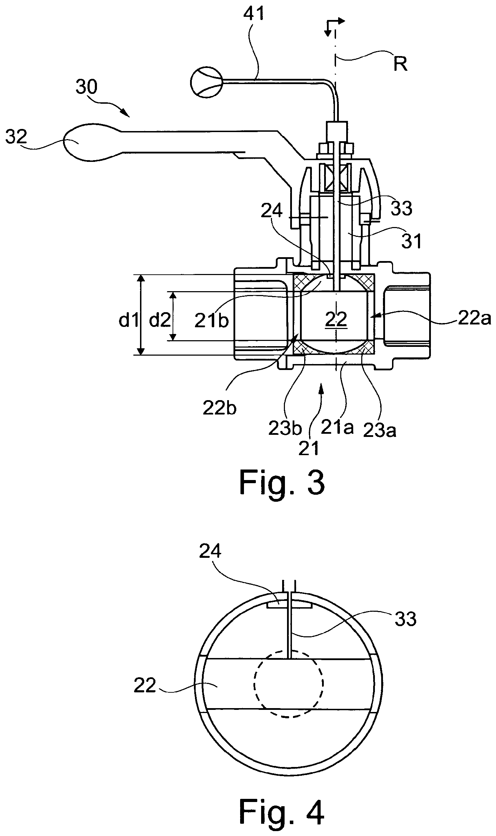

Fig. 3 zeigt die Rohrschließvorrichtung aus Fig. 1 und 2 in Alleinstellung mit über den Drehachszapfen 31 in den Durchgang 22 zugeführter komprimierter Luft; Fig. 4 einen vergrößerten Ausschnitt des Schließelements 21 der Rohrschließvorrichtung gemäß Fig. 3.

Dabei entspricht der kleine Durchmesser d2 der kugelschicht- bzw. rotationsschichtförmig an der Mantelfläche des kugel- oder rotationssymmetrischen Körpers anliegenden Dichtkörper 23a, 23b vorzugsweise stets dem Durchmesser der Ein- 22a bzw. Austrittsöffnung 22b der im kugelsymmetrischen Körper 21 ausgebildeten Durchgangsbohrung 22.

Der große Durchmesser d1 des kugelschicht- bzw. rotationsschichtförmig an der Mantelfläche des kugel- oder rotationssymmetrischen Körpers 21 anliegenden Dichtkörpers 23a, 23b dagegen korrespondiert im Ausführungsbeispiel nach Fig. 3 bzw. 4 im Wesentlichen mit dem maximalen Durchmesser des kugelförmigen Schließelements 21.

Nachdem in dieser ersten Ausgestaltung eines Ventils 20 zwischen den beiden Dichtabschnitten 21a und 21b und der Rohrleitung 10 zwei die Mantelfläche des Kugelkörpers 21 letztlich vollflächig überdeckende Dichtkörper 23a und 23b vorgesehen sind, ist bevorzugt, dass die komprimierte Luft durch in dem Drehachszapfen 31 und der Kugeloberseite ausgebildeten, vorzugsweise zueinander korrespondierende, Öffnungen 33 in die Durchgangsbohrung 22 geführt wird. Aufgrund der Einbringung von komprimierter Luft durch den Drehachszapfen 31 ist keinerlei Änderung oder in folge dessen gar Beschädigung der Dichtkörper 23a und 23b gegeben, was die Gefahr potentieller Keimpools ausschließt.

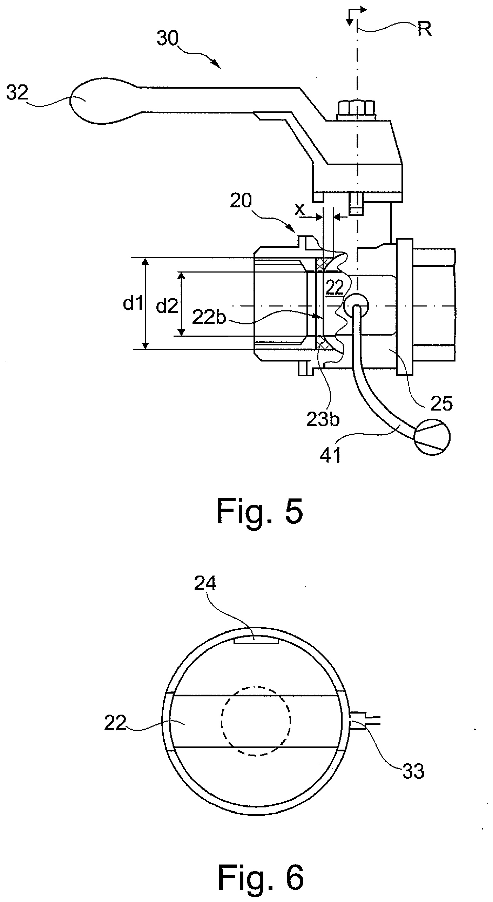

Fig. 5 zeigt eine alternative Rohrschließvorrichtung in Alleinstellung einer zweiten Ausgestaltung mit über das Ventilgehäuse 25 in den Durchgang 22 zugeführter komprimierter Luft; Fig. 6 einen vergrößerten Ausschnitt des Schließelements 21 der Rohrschließvorrichtung gemäß Fig. 5.

Dabei entspricht der kleine Durchmesser d2 der kugelschicht- bzw. rotationsschichtförmig an der Mantelfläche des kugel- oder rotationssymmetrischen Körpers anliegenden Dichtkörper 23a, 23b wiederum bevorzugt dem Durchmesser der Ein- 22a bzw. Austrittsöffnung 22b der im kugelsymmetrischen Körper 21 ausgebildeten Durchgangsbohrung 22.

Der große Durchmesser d1 des kugelschicht- bzw. rotationsschichtförmig an der Mantelfläche des kugel- oder rotationssymmetrischen Körpers 21 anliegenden Dichtkörpers 23a, 23b dagegen ist im Ausführungsbeispiel nach Fig. 5 bzw. 6 nunmehr bereits wenige Millimeter x, beispielsweise zwischen 1,5 und 5, Millimeter, vom kleinen Durchmesser d2 beabstandet angeordnet.

Nachdem in dieser zweiten Ausgestaltung eines Ventils 20 zwischen den beiden Dichtabschnitten 21a und 21b und der Rohrleitung 10 jeweils ringdichtförmige, also die Mantelfläche des Kugelkörpers 21 letztlich teilflächig überdeckende Dichtkörper 23a und 23b vorgesehen sind, ist bevorzugt, dass die komprimierte Luft durch eine im Ventilgehäuse 25 ausgebildeten Öffnung 33 in die Durchgangsbohrung 22 geführt wird. Das grundsätzlich bestehende Risiko einer Keimpoolbildung ist hierbei ebenfalls vorteilhaft ausgeschlossen.

Das Funktionsprinzip einer Maschine zur Bearbeitung von Nahrungsmittelmischungen sei nachstehend beispielhaft anhand einer Eiscrememaschine erläutert:
Der Betrieb der pneumatischen Schaltung 40 wird vollständig in einer automatisierten Weise durch das elektronische Steuerzentrum 50 auf der Basis der Signale betrieben, welche durch die Positionssensoren 52 und die Drucksensoren 43 und 44 oder durch den einzelnen elektronischen Wächter erfasst werden.

Wenn der magnetische Sensor 52 tatsächlich erfasst, dass sich das Schließelement 21 des Drosselventils 20 in einer Schließposition befindet, drückt der Kompressor 42 unter Druck stehende Luft durch das Zufuhrrohr 41 und die Öffnungen 33, wobei der Durchgang 22 im Schließelement 21 des Ventils 20 unter Druck gesetzt wird.

Wenn der maximale voreingestellte Systemdruck erreicht ist, welcher zum Beispiel gleich einem Überdruck von 0,1 bar ist, was durch den Hochdruckwächter 43 erfasst wird, stoppt der Kompressor 42.

Ein konstanter maximaler Systemdruck muss sichergestellt sein, wenn sich das Schließelement 21 des Ventils 20 in einer Schließposition befindet. Sollte es trotz der langlebig verbesserten Dichtwirkung aufgrund flächig wirkender Dichtabschnitte 21a und 21b sich doch einmal ein Verlust in der pneumatischen Schaltung 40 ergeben, wird der Druckabfall durch den Niederdruckwächter 44 erkannt und eine Störung der Maschine zwecks Erneuerung des/der Dichtsitze/s angezeigt.

Am Ende des Pasteurisiervorgangs der Nahungsmittelmischung in dem oberen Tank 11, welcher zum Beispiel mittels einer Temperatursteuervorrichtung erkannt wird, öffnet z.B. die Bedienperson manuell das Drosselventil 20, indem ein Bedienelement 32 betätigt wird, was das Öffnen der unter Druck stehenden Schaltung 40 bewirkt.

Alternativ kann das Steuerzentrum 50 selbst beispielsweise mittels eines elektrischen Motors (nicht dargestellt) das automatische Öffnen und Schließen des Drosselventils 20 betreiben.

In jedem Fall setzt der Kompressor 42 die pneumatische Schaltung 40 nur unter Druck, wenn der Positionssensor 52 anzeigt, dass das Drosselventil 20 zurück in eine Schließposition gebracht worden ist.

Mit der pneumatischen Schaltung 40 bzw. der elektronischen Steuereinheit 50 ist in der Schließstellung der passgenaue Dichtsitz des Drosselventils 20 somit kontinuierlich überwachbar und zugleich eine gesetzeskonforme Lebensmittelbereitung gewährleistet.

Die erfindungsgemäße Nahrungsmittelmischmaschine mit einer Rohrschließvorrichtung, welche zur Bearbeitung von Nahrungsmittelmischungen geeignet ausgebildet ist, eignet sind gleichermaßen zur Verwendung in einer Maschine zur Herstellung einer Milch enthaltenden Eiscreme wie zur Bearbeitung bzw. Bereitung von z.B. Karamelle, Konfitüre, Zuckerplätzchen, Bayerische Creme, Milchcreme oder sog. Konditorcremes.

### Bezugszeichenliste

- 1: Maschine zur Bearbeitung von Nahrungsmittelmischungen, insbesondere Eiscrememaschine

- 10: Rohrleitung; Rohr
- 11: obere Tank
- 12: untere Tank

- 20: Drosselventil
- 21: Schließelement; dreidimensionaler rotationssymmetrischer Körper
- 21a: erster Dichtabschnitt
- 21b: zweiter Dichtabschnitt
- 22: Durchgang, Durchgangsbohrung
- 22a: Eintrittsöffnung des Durchgangs 22
- 22b: Austrittsöffnung des Durchgangs 22
- 23a: erster Dichtkörper des Drosselventils 20
- 23b: zweiter Dichtkörper des Drosselventils 20
- 24: Aufnahme
- 25: Ventilgehäuse

- R: Rotationsachse des Schließelements 21

- d1: großer Durchmesser der kugelschicht- bzw. rotationsschichtförmig an der Mantelfläche des kugel- oder rotationssymmetrischen Körpers des Schließelements 21 anliegenden Dichtkörper 23a bzw. 23b
- d2: kleiner Durchmesser der kugelschicht- bzw. rotationsschichtförmig an der Mantelfläche des kugel- oder rotationssymmetrischen Körpers des Schließelements 21 anliegenden Dichtkörper 23a bzw. 23b

- 30: Aktivierungsvorrichtung
- 31: Drehachszapfen
- 32: manuelles Bedienelement
- 33: Öffnungen im Drehachszapfen 31, Schließelement 21 und/oder Ventilgehäuse 35 für Zufuhr von komprimierter Luft in den Durchgang 22

- 40: pneumatische Schaltung
- 41: Zufuhrrohr für komprimierte Luft
- 42: Kompressor
- 43: Hochdruckwächter
- 44: Niederdruckwächter
- 45: Luftreservetank

- 50: Steuereinheit
- 51: elektrische Leitungen
- 52: magnetischer Positionssensor

## Patentansprüche

1. Nahrungsmittelmischmaschine mit einer Rohrschließvorrichtung,
- wobei die Nahrungsmittelmischmaschine zur Bearbeitung von Nahrungsmittelmischungen geeignet ist,
- insbesondere eine Maschine (1) zur Herstellung einer auf Milch basierenden Eiscreme, wobei als Ausgangsprodukt ganz oder teilweise Rohmilch und/oder andere unpasteurisierte Produkte Verwendung finden können, die Rohrschließvorrichtung umfassend:
- ein in einer Rohrleitung (10) angeordnetes Drosselventil (20) mit einem Schließelement (21), welches mit zwei Dichtabschnitten (21a, 21b) gegenüber der Rohrleitung (10) ausgestaltet ist, und
- einer Aktivierungsvorrichtung (30) für die Überführung des Schließelements (21) aus einer Offenstellung in eine Schließstellung sowie umgekehrt,
wobei
- das Schließelement (21) durch einen rotationssymmetrischen Körper gebildet ist;
- das Schließelement (21) einen Durchgang (22) aufweist;
- in der Offenstellung des Schließelements (21) zumindest die Ein- (22a) und Austrittsöffnungen (22b) des Durchgangs (22) mit der Rohrleitung (10) fluchten;
und wobei
- in der Schließstellung des Schließelements (21) der Durchgang (22) durch eine pneumatische Schaltung (40) für den Einlass von komprimierter Luft einem Druck ausgesetzt ist.

2. Nahrungsmittelmischmaschine mit einer Rohrschließvorrichtung nach Anspruch 1, **dadurch gekennzeichnet, dass** der das Schließelement (21) bildende rotationssymmetrische Körper ein Hohlkörper ist, wobei dessen Hohlraum den Durchgang (22) bildet.

3. Nahrungsmittelmischmaschine mit einer Rohrschließvorrichtung nach Anspruch 1, **dadurch gekennzeichnet, dass** der das Schließelement (21) bildende rotationssymmetrische Körper ein Massivkörper ist, wobei eine Durchgangsbohrung den Durchgang (22) bildet.

4. Nahrungsmittelmischmaschine mit einer Rohrschließvorrichtung nach einem der vorherigen Ansprüche 1 bis 3, **dadurch gekennzeichnet, dass** der Durchmesser zumindest der Ein- (22a) und Austrittsöffnung (22b) des Durchgangs (22) im Wesentlichen gleich dem Innendurchmesser der Rohrleitung (10) ist.

5. Nahrungsmittelmischmaschine mit einer Rohrschließvorrichtung nach einem der vorherigen Ansprüche, **dadurch gekennzeichnet, dass** die Aktivierungseinrichtung (30) durch einen entlang der Rotationsachse (R) des Schließelements (21) angreifenden Drehachszapfen (31) gebildet ist.

6. Nahrungsmittelmischmaschine mit einer Rohrschließvorrichtung nach Anspruch 5, **dadurch gekennzeichnet, dass** das dem Schließelement (21) zugewandte Ende des Drehachszapfens (31) in eine im Schließelement (21) ausgebildeten Aufnahme (24) greift.

7. Nahrungsmittelmischmaschine mit einer Rohrschließvorrichtung nach Anspruch 5 oder 6, **dadurch gekennzeichnet, dass** an dem dem Schließelement (21) abgewandten Ende der Drehachse (31) ein manuelles Bedienelement (32) oder ein automatisierter, vorzugsweise hydraulisch, pneumatisch und/oder elektrisch betreibbarer, Aktuator zur Überführung des Schließelements (21) in die Offen- bzw. Schließstellung sowie umgekehrt angeordnet ist.

8. Nahrungsmittelmischmaschine mit einer Rohrschließvorrichtung nach einem der vorherigen Ansprüche, **dadurch gekennzeichnet, dass** der das Schließelement (21) bildende rotationssymmetrische Körper die Form eines Kugelkörpers, eines Doppelkegelkörper oder eines Ellipsoiden aufweist.

9. Nahrungsmittelmischmaschine mit einer Rohrschließvorrichtung nach einem der vorherigen Ansprüche, **dadurch gekennzeichnet, dass** die beiden Dichtabschnitte (21a, 21b) des Schließkörpers (21) durch Mantelflächen des kugel- oder rotationssymmetrischen Körpers gebildet sind.

10. Nahrungsmittelmischmaschine mit einer Rohrschließvorrichtung nach einem der vorherigen Ansprüche, **dadurch gekennzeichnet, dass** die beiden Dichtabschnitte (21a, 21b) des Schließkörpers (21) an kugelschicht- bzw. rotationsschichtförmig ausgebildete Dichtkörper (23a, 23b) anliegen.

11. Nahrungsmittelmischmaschine mit einer Rohrschließvorrichtung nach einem der Ansprüche 8 bis 10, **dadurch gekennzeichnet, dass** der kleine Durchmesser (d2) des kugelschicht- bzw. rotationsschichtförmig an der Mantelfläche des kugel- oder rotationssymmetrischen Körpers des Schließelements (21) anliegenden Dichtkörpers (23a, 23b) dem Durchmesser der Ein- (22a) bzw. Austrittsöffnung (22b) des im kugel- oder rotationssymmetrischen Körper des Schließelements (21) ausgebildeten Durchgangs (22) entspricht.

12. Nahrungsmittelmischmaschine mit einer Rohrschließvorrichtung nach einem der Ansprüche 8 bis 11, **dadurch gekennzeichnet, dass** der große Durchmesser (d1) des kugelschicht- bzw. rotationsschichtförmig an der Mantelfläche des kugel- oder rotationssymmetrischen Körpers des Schließelements (21) anliegenden Dichtkörpers (23a, 23b) bereits wenige Millimeter (x), insbesondere zwischen 1,5 und 5 Millimeter, vom kleinen Durchmesser (d2) beabstandet endend angeordnet oder im Wesentlichen mit dem maximalen Kugeldurchmesser bzw. dem maximalen Rotationskörperdurchmesser korrespondiert.

13. Nahrungsmittelmischmaschine mit einer Rohrschließvorrichtung nach einem der vorherigen Ansprüche, **dadurch gekennzeichnet, dass** komprimierte Luft
- durch eine im Ventilgehäuse (25) ausgebildete Öffnung (33)
oder
- durch in einer bzw. der die Aktivierungseinrichtung (30) bildenden Drehachszapfen (31) sowie der Oberseite des Schließelements (21) ausgebildeten, vorzugsweise zueinander korrespondierenden, Öffnungen (33)
in den Durchgang (22) führbar ist.

14. Nahrungsmittelmischmaschine mit einer Rohrschließvorrichtung nach einem der vorherigen Ansprüche, **dadurch gekennzeichnet, dass** der das Schließelement (21) bildende rotationssymmetrische Körper aus einem lebensmittelgeeignetem Material, insbesondere aus Metall wie Edelstahl oder Aluminium, aus einem Polyethylen (PE)-haltigen Kunststoff oder aus einer Keramik, gefertigt ist.

15. Nahrungsmittelmischmaschine mit einer Rohrschließvorrichtung nach einem der vorherigen Ansprüche, **dadurch gekennzeichnet, dass** die Dichtkörper (23a, 23b) zum Arbeitsdruck und zur Arbeitstemperatur der Maschine geeignet eingerichtet und vorzugsweise aus Polyethylen (PE)-haltige Kunststoffen oder aus einer Keramik gefertigt sind.

## Claims

1. Food-mixing machine having a pipe-closing device,
- wherein the food-mixing machine is suitable for processing food mixtures,
- in particular a machine (1) for producing a milk-based ice cream, it being possible for the starting product used to be, entirely or in part, raw milk and/or other unpasteurized products,
the pipe-closing device comprising:
- a throttle valve (20), which is arranged in a pipeline (10) and has a closing element (21), which is configured with two sealing portions (21a, 21b) in relation to the pipeline (10), and
- an activation device (30) for transferring the closing element (21) from an open position into a closed position, and vice versa, wherein
- the closing element (21) is formed by a rotationally symmetrical body;
- the closing element (21) has a through-passage (22) ;
- in the open position of the closing element (21), at least the entry openings (22a) and exit openings (22b) of the through-passage (22) are aligned with the pipeline (10);
and wherein
- in the closed position of the closing element (21), the through-passage (22) is subjected to pressure by a pneumatic circuit (40) for the intake of compressed air.

2. Food-mixing machine having a pipe-closing device according to Claim 1, **characterized in that** the rotationally symmetrical body forming the closing element (21) is a hollow body, wherein the cavity of the latter forms the through-passage (22).

3. Food-mixing machine having a pipe-closing device according to Claim 1, **characterized in that** the rotationally symmetrical body forming the closing element (21) is a solid body, wherein a through-passage bore forms the through-passage (22).

4. Food-mixing machine having a pipe-closing device according to one of the preceding Claims 1 to 3, **characterized in that** the diameter at least of the entry opening (22a) and exit opening (22b) of the through-passage (22) is essentially equal to the internal diameter of the pipeline (10).

5. Food-mixing machine having a pipe-closing device according to one of the preceding claims, **characterized in that** the activation device (30) is formed by a pivot pin (31), which acts along the axis of rotation (R) of the closing element (21).

6. Food-mixing machine having a pipe-closing device according to Claim 5, **characterized in that** that end of the pivot pin (31) which is directed towards the closing element (21) engages in a mount (24) formed in the closing element (21).

7. Food-mixing machine having a pipe-closing device according to Claim 5 or 6, **characterized by** the arrangement, at that end of the pivot pin (31) which is directed away from the closing element (21), of a manual operating element (32) or an automated, preferably hydraulically, pneumatically and/or electrically operable, actuator for transferring the closing element (21) into the open or closed position, and vice versa.

8. Food-mixing machine having a pipe-closing device according to one of the preceding claims, **characterized in that** the rotationally symmetrical body forming the closing element (21) is in the form of a spherical body, of a double-cone body or of an ellipsoid.

9. Food-mixing machine having a pipe-closing device according to one of the preceding claims, **characterized in that** the two sealing portions (21a, 21b) of the closing body (21) are formed by lateral surfaces of the spherically or rotationally symmetrical body.

10. Food-mixing machine having a pipe-closing device according to one of the preceding claims, **characterized in that** the two sealing portions (21a, 21b) of the closing body (21) butt against spherical-layer-form or rotational-layer-form sealing bodies (23a, 23b).

11. Food-mixing machine having a pipe-closing device according to one of Claims 8 to 10, **characterized in that** the small diameter (d2) of the sealing body (23a, 23b), which butts in spherical-layer form or rotational-layer form against the lateral surface of the spherically or rotationally symmetrical body of the closing element (21), corresponds to the diameter of the entry opening (22a) or exit opening (22b) of the through-passage (22), which is formed in the spherically or rotationally symmetrical body of the closing element (21).

12. Food-mixing machine having a pipe-closing device according to one of Claims 8 to 11, **characterized in that** the large diameter (d1) of the sealing body (23a, 23b), which butts in spherical-layer form or rotational-layer form against the lateral surface of the spherically or rotationally symmetrical body of the closing element (21), terminates by a distance of a few millimetres (x), in particular between 1.5 and 5 millimetres, away from the small diameter (d2) or corresponds essentially to the maximum sphere diameter or the maximum body-of-rotation diameter.

13. Food-mixing machine having a pipe-closing device according to one of the preceding claims, **characterized in that** compressed air can be guided into the through-passage (22)
- through an opening (33) formed in the valve housing (25), or
- through openings (33) which preferably correspond to one another and are formed in a or the pivot pin (31), which forms the activation device (30), and the upper side of the closing element (21) .

14. Food-mixing machine having a pipe-closing device according to one of the preceding claims, **characterized in that** the rotationally symmetrical body forming the closing element (21) is produced from a material which is suitable for foods, in particular from metal, such as stainless steel or aluminium, from a polyethylene (PE)-containing plastic or from a ceramic material.

15. Food-mixing machine having a pipe-closing device according to one of the preceding claims, **characterized in that** the sealing bodies (23a, 23b) are designed to be suitable for the operating pressure and for the operating temperature of the machine and are produced preferably from polyethylene (PE)-containing plastics or from a ceramic material.

## Revendications

1. Machine d'élaboration de mélanges alimentaires dotée d'un dispositif de fermeture de tube :
- la machine d'élaboration de mélanges alimentaires étant adaptée à l'élaboration de mélanges alimentaires ;
- notamment une machine (1) de fabrication d'une crème glacée à base de lait, le produit de départ utilisé pouvant être pour tout ou partie du lait cru et/ou n'importe quels autres produits non pasteurisés ;
le dispositif de fermeture de tube comprenant :
- une soupape d'étranglement (20) disposée dans une conduite tubulaire (10) et avec un élément de fermeture (21) configuré avec deux sections d'étanchéité (21a, 21b) vis-à-vis de la conduite tubulaire (10) ; et
- un dispositif d'activation (30) pour le transfert de l'élément de fermeture (21) d'une position ouverte dans une position fermée et inversement ;
- l'élément de fermeture (21) étant formé par un corps symétrique en rotation ;
- l'élément de fermeture (21) comportant un passage (22) ;
- dans la position ouverte de l'élément de fermeture (21) au moins les ouvertures d'entrée (22a) et de sortie (22b) du passage (22) étant alignées avec la conduite tubulaire (10) ; et
- dans la position fermée de l'élément de fermeture (21), le passage (22) étant soumis à une pression par le biais d'un circuit pneumatique (40) pour l'admission d'air comprimé.

2. Machine d'élaboration de mélanges alimentaires dotée d'un dispositif de fermeture de tube selon la revendication 1, **caractérisée en ce que** le corps symétrique en rotation formant l'élément de fermeture (21) est un corps creux dont la chambre creuse forme le passage (22).

3. Machine d'élaboration de mélanges alimentaires dotée d'un dispositif de fermeture de tube selon la revendication 1, **caractérisée en ce que** le corps symétrique en rotation formant l'élément de fermeture (21) est un corps massif, un alésage traversant formant le passage (22).

4. Machine d'élaboration de mélanges alimentaires dotée d'un dispositif de fermeture de tube selon l'une quelconque des revendications précédentes 1 à 3, **caractérisée en ce que** le diamètre d'au moins l'ouverture d'entrée (22a) et de sortie (22b) du passage (22) est pour l'essentiel égal au diamètre intérieur de la conduite tubulaire (10).

5. Machine d'élaboration de mélanges alimentaires dotée d'un dispositif de fermeture de tube selon l'une quelconque des revendications précédentes, **caractérisée en ce que** le dispositif d'activation (30) est formé par un tenon d'axe de rotation (31) s'engrenant le long de l'axe de rotation (R) de l'élément de fermeture (21).

6. Machine d'élaboration de mélanges alimentaires dotée d'un dispositif de fermeture de tube selon la revendication 5, **caractérisée en ce que** l'extrémité, orientée vers l'élément de fermeture (21), du tenon d'axe de rotation (31) s'engrène dans un logement (24) réalisé dans l'élément de fermeture (21).

7. Machine d'élaboration de mélanges alimentaires dotée d'un dispositif de fermeture de tube selon la revendication 5 ou 6, **caractérisée en ce qu'**un élément de commande (32) manuel ou un actionneur automatisé, de préférence actionnable de façon hydraulique, pneumatique et/ou électrique est disposé au niveau de l'extrémité, opposée à l'élément de fermeture (21), de l'axe de rotation (31) pour le transfert de l'élément de fermeture (21) dans la position ouverte et/ou fermée et inversement.

8. Machine d'élaboration de mélanges alimentaires dotée d'un dispositif de fermeture de tube selon l'une quelconque des revendications précédentes, **caractérisée en ce que** le corps symétrique en rotation formant l'élément de fermeture (21) prend la forme d'un corps sphérique, d'un corps à double cône ou d'un ellipsoïde.

9. Machine d'élaboration de mélanges alimentaires dotée d'un dispositif de fermeture de tube selon l'une quelconque des revendications précédentes, **caractérisée en ce que** les deux sections d'étanchéité (21a, 21b) du corps de fermeture (21) sont formées par les surfaces d'enveloppe du corps ou sont symétriques sphériques ou symétriques en rotation.

10. Machine d'élaboration de mélanges alimentaires dotée d'un dispositif de fermeture de tube selon l'une quelconque des revendications précédentes, **caractérisée en ce que** les deux sections d'étanchéité (21a, 21b) du corps de fermeture (21) reposent contre les corps d'étanchéité (23a, 23b) réalisés en forme de couche sphérique et/ou de couche de rotation.

11. Machine d'élaboration de mélanges alimentaires dotée d'un dispositif de fermeture de tube selon l'une quelconque des revendications 8 à 10, **caractérisée en ce que** le petit diamètre (d2) du corps d'étanchéité (23a, 23b) butant en forme de couche symétrique sphérique et/ou de couche de rotation contre la surface d'enveloppe du corps symétrique sphérique ou symétrique en rotation de l'élément de fermeture (21) correspond au diamètre de l'ouverture d'entrée (22a) et/ou de sortie (22b) du corps symétrique sphérique ou symétrique en rotation de l'élément de fermeture (21) réalisé Passage (22).

12. Machine d'élaboration de mélanges alimentaires dotée d'un dispositif de fermeture de tube selon l'une quelconque des revendications 8 à 11, **caractérisée en ce que** le grand diamètre (d1) du corps d'étanchéité (23a, 23b) butant en forme de couche sphérique et/ou de couche de rotation contre la surface d'enveloppe du corps symétrique sphérique ou symétrique en rotation de l'élément de fermeture (21) est disposé à la fin à une distance d'au moins quelques millimètres (x), notamment entre 1,5 et 5 millimètres, du petit diamètre (d2) ou correspond pour l'essentiel au diamètre de sphère maximal et/ou au diamètre de corps de rotation maximal.

13. Machine d'élaboration de mélanges alimentaires dotée d'un dispositif de fermeture de tube selon l'une quelconque des revendications précédentes, **caractérisée en ce que** l'air comprimé peut être guidé dans le passage (22) :
- à travers une ouverture (33) réalisée dans le carter de soupape (25) ;
- à travers les ouvertures (33) réalisées dans un ou le tenon d'axe de rotation (31) et/ou formant le dispositif d'activation (30) ainsi que dans le côté supérieur de l'élément de fermeture (21), de préférence en correspondance.

14. Machine d'élaboration de mélanges alimentaires dotée d'un dispositif de fermeture de tube selon l'une quelconque des revendications précédentes, **caractérisée en ce que** le corps symétrique en rotation formant l'élément de fermeture (21) est fabriqué à partir d'une matière adaptée aux produits alimentaires, notamment le métal par exemple l'inox ou l'aluminium, d'une matière plastique contenant du polyéthylène (PE) ou d'une céramique.

15. Machine d'élaboration de mélanges alimentaires dotée d'un dispositif de fermeture de tube selon l'une quelconque des revendications précédentes, **caractérisée en ce que** les corps d'étanchéité (23a, 23b) sont conçus pour s'adapter à la pression de travail et à la température de travail de la machine et sont de préférence fabriqués à partir de préférence de matières plastiques contenant du polyéthylène (PE) ou une céramique.
